# EUROPEAN PATENT SPECIFICATION

(11) **EP 4 024 352 B1**
(45) Date of publication and mention of the grant of the patent: **24.01.2024**
(21) Application number: 22169131.4
(22) Date of filing: 21.04.2022
(51) Int. Cl.: G06V 40/40, G06V 40/18, G06V 10/56

(54) **METHOD AND APPARATUS FOR FACE LIVENESS DETECTION, AND STORAGE MEDIUM**
VERFAHREN UND VORRICHTUNG ZUR DETEKTION VON GESICHTSAKTIVITÄT UND SPEICHERMEDIUM
PROCÉDÉ ET APPAREIL DE DÉTECTION DE VIVACITÉ DU VISAGE, ET SUPPORT DE STOCKAGE

(30) Priority: 25.05.2021 CN 202110573893
(43) Date of publication of application: 06.07.2022
(73) Proprietor: BEIJING BAIDU NETCOM SCIENCE TECHNOLOGY CO., LTD., Beijing 100085 (CN)
(72) Inventor: WANG, Keyao, Beijing, 100085 (CN); LU, Jie, Beijing, 100085 (CN); LI, Yunhao, Beijing, 100085 (CN); YUE, Haixiao, Beijing, 100085 (CN); FENG, Haocheng, Beijing, 100085 (CN)
(74) Representative: Maiwald GmbH

(56) References cited:
- WO-A1-2021/073364
- BOULKENAFET ZINELABIDINE ET AL: "Face anti-spoofing based on color texture analysis", 2015 IEEE INTERNATIONAL CONFERENCE ON IMAGE PROCESSING (ICIP), IEEE, 27 September 2015 (2015-09-27), pages 2636-2640, XP032826902, DOI: 10.1109/ICIP.2015.7351280 [retrieved on 2015-12-09]
- LI TINGTING ET AL: "A novel face anti-spoofing method using multiple color space models", ALGORITHMS AND TECHNOLOGIES FOR MULTISPECTRAL, HYPERSPECTRAL, AND ULTRASPECTRAL IMAGERY XIX - PROCEEDINGS OF SPIE, SPIE, US, vol. 11720, 27 January 2021 (2021-01-27), pages 1172021-1172021, XP060138012, ISSN: 0277-786X, DOI: 10.1117/12.2589447 ISBN: 978-1-5106-4548-6

## Description

### TECHNICAL FIELD

The invention relates to a field of artificial intelligence (AI) technologies, and particularly to a method and an apparatus for a face liveness detection, and a storage medium, which may be applied to scenarios such as smart cities and smart finance.

### BACKGROUND

Face liveness detection is a basic composition module of a face recognition system that distinguishes whether an image is shot for a real person, to ensure security of the face recognition system. A face liveness detection algorithm using a deep learning technology is a mainstream method in the art, which greatly enhances precision compared with a conventional algorithm.

However, in some application scenarios, problems such as poor generalization and reduced effect for unknown attack samples and modes occur on the face liveness algorithm based on deep learning, which affects the actual application performance.

The features of the preamble of independent claim 1 and independent claim 8 are known from WO 2021/073364 A1.

### SUMMARY

The invention provides a method and an apparatus for a face liveness detection, and a storage medium applied in scenarios such as smart cities and smart finance.

The invention is defined in independent claims 1, 7, 10 and 11. Optional or preferred features are subject of the dependent claims.

### BRIEF DESCRIPTION OF THE DRAWINGS

The drawings are intended to better understand the solution, and do not constitute a limitation to the disclosure.
FIG. 1 is a flowchart of a method for a face liveness detection according to an embodiment of the disclosure;
FIG. 2 is a flowchart of acquiring a liveness score value according to an embodiment of the disclosure;
FIG. 3 is a flowchart of a method for a face liveness detection according to an embodiment of the disclosure;
FIG. 4 is a schematic diagram of a process of a face liveness detection according to an embodiment of the disclosure;
FIG. 5 is a schematic diagram of a screen display interface of an electronic device according to an embodiment of the disclosure;
FIG. 6 is a block diagram of an apparatus for a face liveness detection according to an embodiment of the disclosure;
FIG. 7 is a block diagram of an apparatus for a face liveness detection according to an embodiment of the disclosure;
FIG. 8 is a block diagram of an electronic device for implementing a method for a face liveness detection according to an embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

It should be noted that, the face liveness detection is a basic composition module of a face recognition system that distinguishes whether an image is shot for a real person, to ensure security of the face recognition system. A face liveness detection algorithm using a deep learning technology is a mainstream method in the art, which greatly enhances precision compared with a conventional algorithm.

A main method for a face liveness detection using deep learning includes a liveness determination of a convolutional neural network, a liveness determination based on a long short-term memory (LSTM), etc. Such method performs face feature extraction and classification with a neutral network. The deep learning method may extract more stable face features, and greatly enhances performance compared with a conventional method.

However, in some application scenarios, problems such as poor generalization and reduced effect for unknown attack samples and modes occur on the face liveness algorithm based on deep learning, which affects the actual application performance. Since attack samples are complex and diverse, for example, phone picture or print picture attacks, 3D headform attacks etc., based on the fact that attack props in different materials have different reflectivity from the reflectivity of the living human skin, the disclosure provides a method and an apparatus for a face liveness detection based on a colorful color verification, an electronic device and a storage medium. A device screen is used to emit light in different colors to a human face by taking a color sequence as a verification code, and a front camera of the device collects face images in different colors. After a quality algorithm is used to screen qualified frames, a facial color difference algorithm is used to verify whether a color sequence is consistent with the color sequence verification code, and the images are taken as an input of a convolutional neural network to obtain a liveness detection result. In the disclosure, a color sequence verification code is set to determine whether an input image is consistent with a collected image, which enhances security of the entire liveness detection process, and greatly improves accuracy and generalization of a liveness detection algorithm in consideration of complex sample attacks.

A method and an apparatus for a face liveness detection, an electronic device and a storage medium according to the embodiments of the disclosure are described below with reference to drawings.

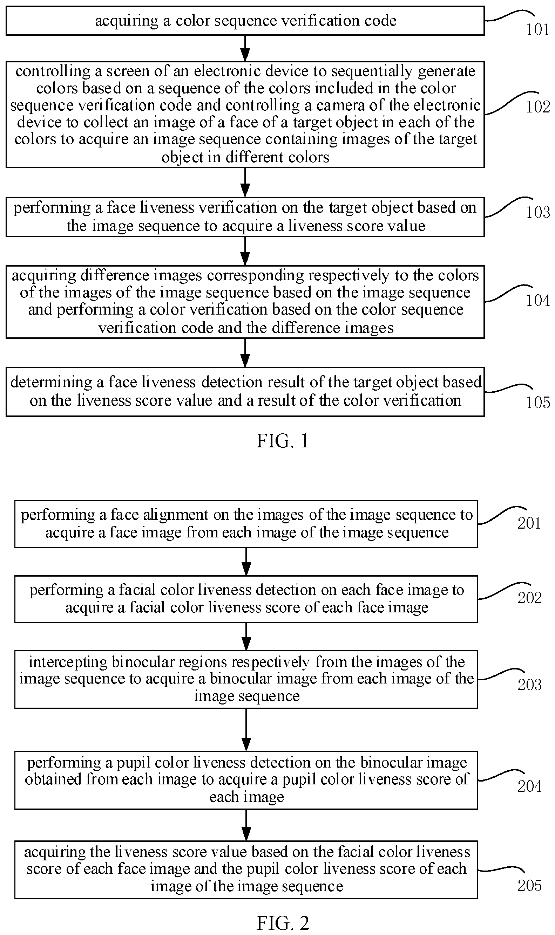

FIG. 1 is a flowchart of a method for a face liveness detection according to an embodiment of the disclosure. The method may be executed by an electronic device. As illustrated in FIG. 1, the method may include the following.

At block 101, a color sequence verification code is acquired.

For example, when an identity verification liveness detection request is received, the color sequence verification code may be obtained based on the request. As an example, the color sequence verification code may be randomly generated based on the request. The color sequence verification code includes a sequence of colors.

At block 102, a screen of an electronic device is controlled to sequentially generate colors based on a sequence of the colors included in the color sequence verification code, and a camera of the electronic device is controlled to collect an image of a face of a target object in each of the colors to acquire an image sequence containing images of the target object in different colors.

For example, after the color sequence verification code is obtained, the screen of the electronic device may be used to emit light in different colors to the target object based on the sequence of colors included in the color sequence verification code, and a front camera of the electronic device is used to collect images of the target object in different colors, thereby acquiring the image sequence containing the images of the target object in different colors.

In order to improve image quality, in the embodiments of the disclosure, when the front camera is used to collect images, a brightness of the front camera may be set to maximum. Or, in other embodiments of the disclosure, when the screen of the electronic device is used to emit light in the corresponding color to the target object, a brightness of the screen may be set to a target brightness.

It should be noted that, in order to prevent injection-type attacks, in some embodiments of the disclosure, the color sequence verification code may be obtained from a server. That is, the color sequence verification code generated by the server is acquired. For example, when an identity verification liveness detection request is received, a color sequence verification code may be requested from a server. When the server receives the request, a color sequence verification code may be randomly generated, and the randomly generated color sequence verification code is sent to the electronic device. The randomly generated color sequence verification code acquired from the server, may prevent affecting a face liveness detection result due to an injection-type attack at an electronic device, thereby enhancing a defense effect of a face liveness detection algorithm against injection-type attack samples.

At block 103, a face liveness verification is performed on the target object based on the image sequence to acquire a liveness score value.

Alternatively, after the image sequence is acquired, the image sequence may be used to perform the face liveness verification to obtain the liveness score value, and it is determined whether the target object is shot for a real person (i.e., a picture of a real person is taken) based on the liveness score value. For example, when the liveness score value is greater than or equal to a certain threshold, it is determined that the target object is shot for a real person, and when the liveness score value is less than the threshold, it is determined that the target object is not shot for a real person, that is, the target object does not belong to a liveness.

At block 104, difference images corresponding respectively to the colors of the images of the image sequence are acquired based on the image sequence, and a color verification is performed based on the color sequence verification code and the difference images.

Alternatively, a facial color difference algorithm is used to acquire the difference images corresponding respectively to the colors of the images of the image sequence. As a possible implementation, face key points in each image of the image sequence are determined; a coordinate of a left eye outer corner and a coordinate of a right eye outer corner in each image are determined based on the face key points in each image; affine transformation processing is performed on each image based on the coordinate of the left eye outer corner and the coordinate of the right eye outer corner in each image to acquire a corrected face region image of each image; and a pairwise difference operation is performed on the corrected face region images based on a sequence of colors generated by the screen to acquire the difference images.

For example, a face detection is performed on each image of the image sequence to obtain a plurality of key points in each image, for example, 72 key points. For each image, a deflection angle α and a center point Cₑ are calculated based on the coordinates (*x*₁₃, *y*₁₃) (*x*₃₄, *y*₃₄) of the left and right eye outer corners, an affine transformation matrix M is calculated based on the deflection angle α and the center point Cₑ, and a corrected face region of the image is acquired through the affine transformation matrix M, and scaled to a scale of 128 × 128, thereby obtaining a corrected face region image of the image. A pairwise difference operation is performed on the corrected face region images based on the sequence of the colors generated by the screen to acquire the difference images. For example, assuming that the sequence of the colors generated by the screen is red(R), green (G), blue (B), the difference operation may be performed on any two of three face region images based on the sequence "(B)-(R)=(R), (R)-(G)=(G), (G)-(B)=(B)" to acquire the difference images corresponding respectively to the colors of the images of image sequence.

It should be noted that, since the color of the face region is greatly affected by ambient light and face skin color, the color of the face region has an obvious color deviation, and when the color recognition is directly performed on the light-emitted face region image, the recognition effect is poor. Therefore, in the disclosure, the color deviation of the face region caused by the face skin color may be eliminated using a difference image of two adjacent light-emitted face region images, thereby achieving accurate color recognition.

In the embodiments of the disclosure, when the difference images are acquired, a color classification may be performed on the difference images to acquire a corresponding color sequence, and verify whether the corresponding color sequence is consistent with the color sequence verification code.

At block 105, a face liveness detection result of the target object is determined based on the liveness score value and a result of the color verification.

Alternatively, when the liveness score value and the result of the color verification meet respective conditions, it is determined that the target object passes the face liveness detection, that is, it is determined that the target object is shot for a real person; when the liveness score value and/or the result of the color verification do not meet respective conditions, it is determined that the target object does not pass the face liveness detection, that is, it is determined that the target object is not shot for a real person. For example, when the liveness score value is greater than or equal to a certain threshold, and the result of the color verification indicates that the color verification is passed, it is determined that the target object passes the face liveness detection, that is, it is determined that the target object is shot for a real person; when the liveness score value is greater than or equal to the certain threshold, and the result of the color verification result indicates that the color verification is not passed, it is determined that the target object does not pass the face liveness detection, that is, it is determined that the target object is not shot for a real person; when the liveness score is less than the certain threshold, and the result of the color verification indicates that the color verification is passed, it is determined that the target object does not pass the face liveness detection, that is, it is determined that the target object is not shot for a real person; and when the liveness score value is less than the certain threshold, and the result of the color verification indicates that the color verification is not passed, it is determined that the target object does not pass the face liveness detection, that is, it is determined that the target object is not shot for a real person.

Based on the method for a face liveness detection in embodiments of the disclosure, a device screen is used to emit light in different colors to a human face, a front camera of the device collects face images in different colors, a facial color difference algorithm is used to verify whether the color sequence is consistent with the color sequence verification code and a face liveness verification is performed on the images, and a face liveness detection result of the target object is determined based on the result of the color verification and the face liveness verification result. In this way, security of the entire liveness detection process is enhanced, and the accuracy and generalization of a liveness detection algorithm are greatly improved in consideration of complex sample attacks. The defense effect of a face liveness detection algorithm against unknown attack sample modes is enhanced. Face liveness detection is one of basic technologies in the face-related field, which is applied to many scenarios such as security, attendance, finance, access control. It is widely applied to many current services. In the disclosure, the performance of the face liveness detection technology may be improved, and the effects and user experiences of a plurality of applications based on the face liveness detection technology may be enhanced, thus facilitating further promotion of business items.

It should be noted that face liveness verification may be achieved based on a facial color liveness detection and a pupil color liveness detection. That is, in some embodiments of the disclosure, it may be verified whether the target object is shot for a real person based on the facial color liveness detection and the pupil color liveness detection. As a possible implementation, as illustrated in FIG. 2, an implementation of performing the face liveness verification on the target object based on the image sequence containing images of the target object in different colors to acquire the liveness score value may include the following.

At block 201, a face alignment is performed on the images of the image sequence to acquire a face image from each image of the image sequence.

Alternatively, image preprocessing is performed on each image of the image sequence to obtain an image containing a face, and a detection model is used to detect a face to obtain a general region of the face; the detection model is an existing face detection model, which may detect a face position. Based on the detected face regions, a face key point detection model is used to detect face key points to obtain coordinate values of the face key points; the face key point detection model is an existing model, the existing model is called and the detected face image is input to obtain a plurality of face key point coordinates, for example, obtain 72 face key point coordinates, respectively being (*x*₁, *y*₁)... (*x*₇₂, *y*₇₂). The face alignment is performed on the target face based on the coordinate values of the face key points to obtain a face image. Specifically, maximum and minimum values of x and y, i.e., xₘᵢₙ, xₘₐₓ, yₘᵢₙ, yₘₐₓ are obtained based on the plurality of face key point coordinates, and one face frame may be determined based on the maximum and minimum values, then the face frame is enlarged by three times, and the face image is intercepted and adjusted to 224×224 px, so that the face image is obtained from each image of the image sequence.

At block 202, a facial color liveness detection is performed on each face image to acquire a facial color liveness score of each face image.

Alternatively, image normalization processing is performed on the obtained face image. In the embodiment, the image normalization processing refers to that normalization processing is sequentially performed on each pixel in the image, and the method for normalization processing is as follows: a pixel value of each pixel is reduced by 128 and then divided by 256, so that the pixel value of each pixel is between [0.5, 0.5]. Random data enhancement processing is performed on the normalized image. The enhancement processed image is input to a facial color liveness detection model to obtain a facial color liveness score. The facial color liveness detection model may be a trained convolutional neural network.

At block 203, binocular regions are respectively intercepted from the images of the image sequence to acquire a binocular image from each image of the image sequence.

It may be understood that, when the screen displays light in different colors, a facula corresponding to the color is displayed on the pupil of the human eye, and it may be verified whether the target object belongs to a liveness through the facula displayed on the pupil. As an example, the binocular region in each image may be processed based on coordinates of the eye corners in the face key points to obtain a binocular image from each image.

In some embodiments, face key points in each image of the image sequence are determined, and a binocular region image is intercepted from each image of the image sequence, and a coordinate of a left eye corner and a coordinate of a right eye corner in each of the binocular region images are determined based on the face key points in each image; the binocular region image is processed based on the coordinate of the left eye corner to obtain a first binocular image, and the binocular region image is processed based on the coordinate of the right eye corner to obtain a second binocular image; and superimposition processing is performed on the first binocular image and the second binocular image of the each image to obtain the binocular image of the each image.

For example, taking processing one image of the image sequence as an example, after the face key points in the image are determined, the binocular region in the image may be intercepted, and the coordinates (*x*₁₃, *y*₁₃) (*x*₁₇, *y*₁₇) of the left eye corner are found based on the face key points, to obtain a distance L₁ of the eye corner and a center point C₁ of the eye, and an affine transformation matrix M₁ is obtained, the intercepted binocular region image is affine transformed to an image having only eyes with a size of 56 × 36 based on affine transformation matrix M₁, that is, the first binocular image of the image; the coordinates (*x*₃₀, *y*₃₀) (*x*₃₄, *y*₃₄) of the right eye corner are found based on the face key points to obtain a distance L₂ of the eye corner and a center point C₂ of the eye, and an affine transformation matrix M₂ is obtained, the intercepted binocular region image is affine transformed to an image having only eyes with a size of 56 × 36 based on the affine transformation matrix M₂, that is, the second binocular image of the image. Superimposition processing is performed on the first binocular image and the second binocular image to obtain the binocular image of the image. The superimposition processing refers to adding a color channel in the first binocular image and a color channel of the second binocular image, for example, the first binocular image has 3 color channels, and the second binocular image has 3 color channels, in this case, the image obtained by superimposing the first binocular image and the second binocular image has 6 color channels. The pupil color liveness detection is performed using two binocular images, which may further enhance the accuracy of the detection result.

At block 204, the pupil color liveness detection is performed on the binocular image of each image of the image sequence to acquire a pupil color liveness score of each image of the image sequence.

Alternatively, the binocular image of each image of the image sequence is input to a pupil color liveness detection module to acquire a pupil color liveness score of each image. The pupil color liveness detection module may be a trained convolutional neural network, and the convolutional neural network includes a 5-layer convolutional layer, a 3-layer maximum pooling layer, and a 1-layer fully-connected layer.

At block 205, the liveness score value is acquired based on the facial color liveness score of the each face image and the pupil color liveness score of each image of the image sequence.

In some embodiments, the facial color liveness scores of the face images are averaged to obtain a facial color liveness average score, and the pupil color liveness scores of the images are averaged to obtain a pupil color liveness average score, and a sum value of the facial color liveness average score and the pupil color liveness average score is used as the liveness score value.

In other embodiments, the above facial color and pupil color liveness detections will be used to obtain the liveness score value based on weight allocation in the actual application. In a possible implementation, the facial color liveness scores of the face images are averaged to obtain a facial color liveness average score, and the pupil color liveness scores of the images are averaged to obtain a pupil color liveness average score, and weighted processing is performed on the facial color liveness average score and the pupil color liveness average score to obtain the liveness score value. As another possible implementation, weighted processing is performed on the facial color liveness score of each face image and the pupil color liveness score of each image to obtain the liveness score value.

Thus, in the disclosure, the face liveness verification may be achieved based on the facial color liveness detection and the pupil color liveness detection, thereby greatly enhancing the accuracy of a liveness detection algorithm.

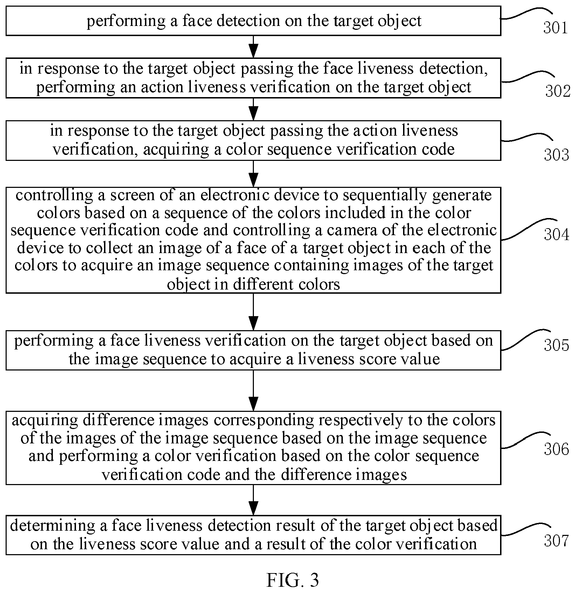

FIG. 3 is a flowchart of a method for a face liveness detection according to an embodiment of the disclosure. As illustrated in FIG. 3, the method for a face liveness detection may include the following blocks.

At block 301, a face detection is performed on the target object.

Alternatively, the face detection includes a face detection algorithm and a face quality verification mechanism. For example, an implementation mode of the face detection algorithm is as follows: the face structure captured by the camera is analyzed and judged, and when a face feature threshold is met, the verification is passed. An implementation mode of the face quality verification mechanism is as follows: in a face detection process, the quality of a face image is determined and the face image is filtered based on a face size, an occlusion degree and a fuzzy degree, the higher the quality of the face image, the higher the confidence of the subsequent process. A quality threshold may be preset, and in the actual process, it may be determined based on the preset threshold, and if yes, a next step is performed; and if not, return to "face detection".

At block 302, in response to the target object passing the face liveness detection, an action liveness verification is performed on the target object.

It may be understood that, action liveness verification refers to that it is determined whether the target object is a liveness by instructing the target object to perform a specified random action. In the technical interaction, in consideration of the experience and comfort of the user, a strengthened verification may be performed by selecting blink and mouth opening actions with a low interference to the user in the process.

It should be noted that the action liveness verification is an auxiliary verification means, which may complete initial screening of the liveness verification, and improve the accuracy of the result to a certain extent. Similarly, the action liveness determination may also be performed by independently regulating the threshold, for example, the number of blinks, or the amplitude of the mouth opening. When the action liveness verification is passed, a next step is performed; if not, the action liveness verification is re-performed.

At block 303, in response to the target object passing the action liveness verification, a color sequence verification code is acquired.

In the embodiments of the disclosure, block 303 may be achieved by any embodiment in the disclosure, which will not be limited nor repeated here.

At block 304, a screen of an electronic device is controlled to sequentially generate colors based on a sequence of the colors included in the color sequence verification code, and a camera of the electronic device is controlled to collect an image of a face of a target object in each of the colors to acquire an image sequence containing images of the target object in different colors.

In the embodiments of the disclosure, block 304 may be achieved by any embodiment in the disclosure, which will not be limited nor repeated here.

At block 305, a face liveness verification is performed on the target object based on the image sequence to acquire a liveness score value.

In the embodiments of the disclosure, block 305 may be achieved by any embodiment in the disclosure, which will not be limited nor repeated here.

At block 306, difference images corresponding respectively to the colors of the images of the image sequence are acquired based on the image sequence, and a color verification is performed based on the color sequence verification code and the difference images.

In the embodiments of the disclosure, block 306 may be achieved by any embodiment in the disclosure, which will not be limited nor repeated here.

At block 307, a face liveness detection result of the target object is determined based on the liveness score value and a result of the color verification.

In the embodiments of the disclosure, block 307 may be achieved by any embodiment in the disclosure, which will not be limited nor repeated here.

Based on the method for a face liveness detection in the embodiments of the disclosure, the face detection and the action liveness verification are performed on the target object, which may help the colorful liveness verification complete the initial screening of liveness verification and further enhance the accuracy of the result of the face liveness detection algorithm.

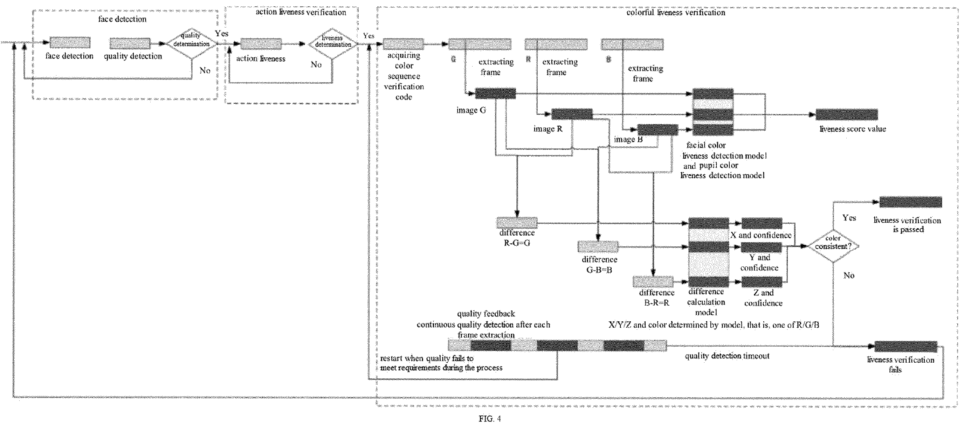

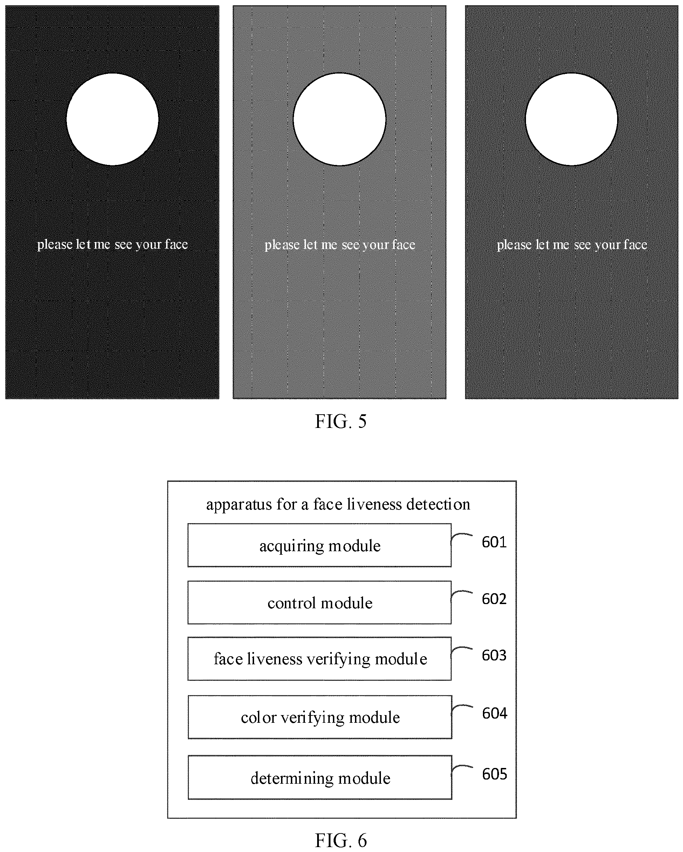

In order to make those skilled in the art understand the disclosure more clearly, an implementation mode of the method for a face liveness detection in the disclosure is described in combination with FIG. 4 and FIG. 5. It needs to be noted that, in the embodiments of the disclosure, the method for a face liveness detection may include a face detection, an action liveness verification, and a colorful liveness verification.

For example, as illustrated in FIG. 4, the face detection includes a face detection algorithm and a face quality verification mechanism. An implementation mode of the face detection algorithm is as follows: the face structure captured by the camera is analyzed and judged, and when a face feature threshold is met, the verification is passed. An implementation mode of the face quality verification mechanism is as follows: in a face detection process, the quality of a face image is determined and the face image is filtered based on a face size, an occlusion degree and a fuzzy degree, the higher the quality of the face image, the higher the confidence of the subsequent process. A quality threshold may be preset, and in the actual process, it may be determined based on the preset threshold, and if yes, a next step is performed; and if not, return to "face detection".

The action liveness verification includes: determining whether the target object is a liveness by instructing the target object to perform a specified random action. In the technical interaction, in consideration of the experience and comfort of the user, a strengthened verification may be performed by selecting blink and mouth opening actions with a low interference to the user in the process in the embodiment. The action liveness verification is an auxiliary verification means, which may help the colorful liveness verification complete the initial screening of liveness, and improve the accuracy of the result to a certain extent. Similarly, the action liveness determination may also be performed by independently regulating the threshold, for example, the number of blinks, or the amplitude of the mouth opening. When the action liveness verification is passed, a next step is performed; if not, the action liveness verification is re-performed.

The colorful liveness verification includes: acquiring a color sequence verification code, playing colors included in the color sequence verification code and collecting face images, performing a facial color liveness detection, a pupil color liveness detection, a color determination, outputting a result, and controlling security and quality. The colorful liveness verification is described as below, and the solution is introduced by taking red, green and blue as an example, the color may be replaced in the same principle.

### 1) Acquiring A Color Sequence Verification Code

A color sequence verification code may be a color sequence randomly generated by a server to be displayed on the screen, and a random sequence may ensure a real time verification performed on the detected user.

### 2) Playing Colors Included In The Color Sequence Verification Code, And Collecting Face Images

First, an electronic device is used to emit light in three different colors to a human face/attack sample, and a front camera of the electronic device is used to collect images of the human face/attack sample in three colors, and the three images are taken as a group to obtain a series of face images. For example, as illustrated in FIG. 5, light in three different colors is emitted by displaying three pictures on the screen of the electronic device, with the colors being red (R), green (G), and blue (B) respectively, and when the three pictures are displayed, the camera collects the face images.

Alternatively, the light in each color lasts for about 1.5s in an illumination process, and image collection will comply with an optimal frame strategy, that is, a face image with the optimal quality is selected from a continuous video stream as an input of a subsequent step, and the quality follows a preset quality determination rule.

### 3) Facial Color And Pupil Color Liveness Detections

A liveness detection is performed on the face images in three colors obtained at step 2), which includes the facial color and pupil color liveness detections each of which outputs a liveness score.

### 3.1) facial color liveness detection algorithm

After the face images in three colors are obtained in the above step, the disclosure defines that a human face includes 72 key points (*x*₁, *y*₁) ... (*x*₇₂, *y*₇₂) respectively.

First, image preprocessing is performed on each image of the image sequence to obtain an image containing a face, and a detection model is used to detect a face to obtain a general region of the face; the detection model is an existing face detection model, which may detect a face position. Based on the detected face regions, a face key point detection model is used to detect face key points to obtain coordinate values of the face key points; the face key point detection model is an existing model, the existing model is called and the detected face image is input to obtain 72 face key point coordinates, respectively being (*x*₁, *y*₁)... (*x*₇₂, *y*₇₂). The face alignment is performed on the target face based on the coordinate values of the face key points to obtain a face image. Specifically, maximum and minimum values of x and y, i.e., xₘᵢₙ, xₘₐₓ, yₘᵢₙ, yₘₐₓ are obtained based on the plurality of face key point coordinates, and one face frame may be determined based on the maximum and minimum values, then the face frame is enlarged by three times, and the face image is intercepted and adjusted to 224×224 px.

Image normalization processing is performed on the obtained face image. In the embodiment, the image normalization processing refers to that normalization processing is sequentially performed on each pixel in the image, and the method for normalization processing is as follows: a pixel value of each pixel is reduced by 128 and then divided by 256, so that the pixel value of each pixel is between [0.5, 0.5]. Random data enhancement processing is performed on the normalized image. The enhancement processed image is input to a facial color liveness detection model to obtain a facial color liveness score.

### 3.2) pupil color liveness detection algorithm

When the screen displays light in three colors of R/G/B, a facula corresponding to the color is displayed on the pupil of the human eye, and the color of the light may be recognized based on the facula displayed on the pupil. Specifically, after 72 key points are obtained, a binocular region image is intercepted, and the coordinates (*x*₁₃, *y*₁₃) (*x*₁₇, *y*₁₇) of the left eye corner are found based on the face key points, to obtain a distance L₁ of the eye corner and a center point C₁ of the eye, and an affine transformation matrix M₁ is obtained, the intercepted binocular region image is affine transformed to an image having only eyes with a size of 56 × 36 based on the affine transformation matrix M₁; the coordinates (*x*₃₀, *y*₃₀) (*x*₃₄, *y*₃₄) of the right eye corner are found based on the face key points to obtain a distance L₂ of the eye corner and a center point C₂ of the eye, and an affine transformation matrix M₂ is obtained, the intercepted binocular region image is affine transformed to an image having only eyes with a size of 56 × 36 based on the affine transformation matrix M₂. The binocular images are superimposed and input to a pupil color liveness detection model to obtain a pupil color liveness score of each binocular image.

The facial color liveness score of each face image and the pupil color liveness score of each binocular image are weighted based on weight allocation in the actual application to obtain the liveness score value.

### 4) Color Determination And Result Output

First, a face detection and a distance determination are performed, and when there is a face and a distance between the face and the screen of the terminal meets a requirement, the server sends a color sequence verification code to the electronic device. The electronic device emits light based on information of the color sequence verification code. Three images generated respectively under the light in colors of red (R), green (G) and blue (B) that meet the image quality requirement are screened from data as a set of data. It should be noted that the color sequence of the three images may be any permutation of the three colors. The group of images and the color sequence are input to a model to verify whether a color sequence of the group of images is the color sequence inputted to the model, and when the color sequence of the group of images is verified to be consistent with the color sequence inputted to the model, the color verification is passed, or else, the color verification fails. The specific implementation will be described as follows:
4.1) the face detection is performed on the acquired three images respectively to obtain corresponding 72 key points;
4.2) a deflection angle α and a center point Cₑ are calculated based on the coordinates (*x*₁₃, *y*₁₃) (*x*₃₄, *y*₃₄) of the left and right eye corners;
4.3) an affine transformation matrix M is calculated based on the deflection angle α and the center point Cₑ, and a corrected face region of each of the three images is obtained based on the affine transformation, and scaled to a dimension of 128 × 128;
4.4) based on the sequence of "(B)-(R)=(R), (R)-(G)=(G), (G)-(B)=(B)", difference images corresponding respectively to the colors of the three images are acquired;
4.5) features of the difference image are extracted using a convolutional neural network to perform the color classification. ResNet 50 is used as a backbone of the convolutional neural network to extract the color features of the face difference image, and after a global average pooling operation is performed on the feature map of the last layer, the color classification of the face difference image is performed through a fully connected layer and a Softmax layer.

Three face difference images are input to a difference calculation model for color recognition. Here, the color is unknown, and assuming that the color is set to X/Y/Z, the color is determined as follows:
4.5. 1) when the confidences of the three colors are greater than or equal to a threshold N, the color comparison is performed, and when color comparison results of two colors or three colors are positive, it is determined that color matching is passed; and visa versa;
4.5. 2) when the confidences of two colors are greater than or equal to N, the color comparison is performed. When color comparison results of the two colors are positive, it is determined that color matching is passed; and visa versa;
4.5. 3) when the confidence of one of the three colors is greater than or equal to N, it is directly determined color matching fails (N is a confidence threshold, which may be adjusted based on actual conditions).

The color determination result obtained from the above steps will be output as a standard whether the detection is passed. When the color is consistent, it means that the verification is passed, and it is determined whether the liveness score value is greater than or equal to a certain threshold, and when the liveness score value is greater than or equal to the certain threshold, it is determined that the face liveness detection of the target object is passed. When the color is inconsistent, and/or the liveness score value is less than the certain threshold, it is determined that the face liveness detection of the target object fails, and a re-verification may be performed on the target object.

### 5) Security And Quality Control

In the whole process of the liveness detection, a face may be continuously tracked and a quality determination may be performed. When the head of the target object is moved out midway (possibly there may be a face change risk), it is determined that the whole process needs to be performed again. When a quality during the process is lower than a preset threshold, the process proceeds to the previous step.

In summary, the disclosure provides a technical solution for detecting a face liveness based on a colorful color verification. Based on a prior knowledge that attack props in different materials has different reflectivity from the reflectivity of the living human skin, a method for a face liveness detection based on a colorful color verification is provided, and a device screen is used to emit light in different colors to a human face, a front camera of the device is used to collect face images in different colors, and the images are taken as an input of a convolutional neural network to obtain a liveness detection result, which greatly improves the accuracy and generalization of a liveness detection algorithm in consideration of complex sample attacks.

FIG. 6 is a block diagram of an apparatus for a face liveness detection according to an embodiment of the disclosure. As illustrated in FIG. 6, the apparatus may include an acquiring module 601, a control module 602, a face liveness verifying module 603, a color verifying module 604 and a determining module 605.

The acquiring module 601 is configured to acquire a color sequence verification code. In a possible implementation, the acquiring module 601 acquires a color sequence verification code generated by a server.

The control module 602 is configured to control a screen of an electronic device to sequentially generate colors based on a sequence of the colors comprised in the color sequence verification code, and control a camera of the electronic device to collect an image of a face of a target object in each of the colors to acquire an image sequence containing images of the target object in different colors.

The face liveness verifying module 603 is configured to perform a face liveness verification on the target object based on the image sequence to acquire a liveness score value.

As a possible implementation, the face liveness verifying module 603 is specifically configured to: perform a facial color liveness detection on each face image to acquire a facial color liveness score of each face image; intercept binocular regions respectively from the images of the image sequence to acquire a binocular image from each image of the image sequence; perform a pupil color liveness detection on each binocular image obtained from each image to acquire a pupil color liveness score of each image; and acquire the liveness score value based on the facial color liveness score of each face image and the pupil color liveness score of each image of the image sequence.

Alternatively, an implementation of intercepting binocular regions respectively from the images of the image sequence to acquire a binocular image from each image of the image sequence by the face liveness verifying module 603 includes: determining face key points in each image of the image sequence; intercepting a binocular region image from each image of the image sequence; determining a first coordinate of a left eye corner and a second coordinate of a right eye corner in each binocular region image based on the face key points in each image; processing the binocular region image based on the first coordinate to obtain a first binocular image; and processing the binocular region image based on the second coordinate to obtain a second binocular image; and performing superimposition processing on the first binocular image and the second binocular image of each image to obtain the binocular image.

Alternatively, an implementation of acquiring the liveness score value based on the facial color liveness score of each face image and the pupil color liveness score of each image by the face liveness verifying module 603 includes: performing weighted processing on the facial color liveness score of each face image and the pupil color liveness score of each image of the image sequence to acquire the liveness score value.

The color verifying module 604 is configured to acquire difference images corresponding respectively to the colors of the images of the image sequence based on the image sequence, and perform a color verification based on the color sequence verification code and the difference images.

As a possible implementation, the color verifying module 604 determines face key points in each image of the image sequence; determines a third coordinate of left eye outer corner and a fourth coordinate of a right eye outer corner in each image based on the face key points in each image; performs affine transformation processing on each image based on the third coordinate and the fourth coordinate to acquire a corrected face region image of each image; performs a pairwise difference operation on the corrected face region images based on a sequence of the colors generated by the screen to acquire the difference images; performs a color classification on the difference images to acquire a color sequence, and verifies whether the color sequence is consistent with the color sequence verification code.

The determining module 605 is configured to determine a face liveness detection result of the target object based on the liveness score value and a result of the color verification.

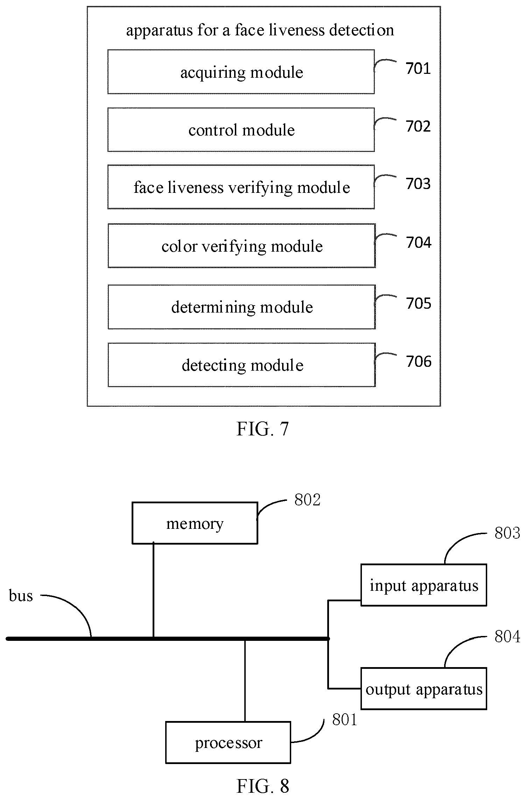

In some embodiments, as illustrated in FIG. 7, the apparatus for a face liveness detection may further include a detecting module 706. The detecting module 706 is configured to continuously track the face of the target object during the face liveness detection, and detect whether a head of the target object moves out of a lens. The acquiring module 701 is further configured to, in response to the head of the target object moving out of the lens, return to execute the step of acquiring the color sequence verification code. Blocks 701-705 in FIG. 7 have the same function and structure with blocks 601-605 in FIG. 6.

With regard to the apparatus in the embodiments, the specific way in which each module performs operation has been described in detail in the embodiments of the method and will not be elaborated here.

Based on the apparatus for a face liveness detection in embodiments of the disclosure, a device screen is used to emit light in different colors to a human face, a front camera of the device collects face images in different colors, a facial color difference algorithm is used to verify whether the color sequence is consistent with the color sequence verification code and a face liveness verification is performed on the images, and a face liveness detection result of the target object is determined based on the result of the color verification and the face liveness verification result. In this way, security of the entire liveness detection process is enhanced, and the accuracy and generalization of a liveness detection algorithm are greatly improved in consideration of complex sample attacks. The defense effect of a face liveness detection algorithm against unknown attack sample modes is enhanced. Face liveness detection is one of basic technologies in the face-related field, which is applied to many scenarios such as security, attendance, finance, access control. It is widely applied to many current services. In the disclosure, the performance of the face liveness detection technology may be improved, and the effects and user experiences of a plurality of applications based on the face liveness detection technology may be enhanced, thus facilitating further promotion of business items.

According to the embodiments of the disclosure, the disclosure provides an electronic device, a readable storage medium and a computer program product.

FIG. 8 is a block diagram of an electronic device configured to achieve the method for a face liveness detection according to an embodiment of the disclosure. The electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in Fig. 8, the electronic device includes: one or more processors 801, a memory 802, and an interface configured to connect various components, including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementation, a plurality of processors and/or a plurality of buses may be configured with a plurality of memories if necessary. Similarly, the processor may connect a plurality of electronic devices, and each device provides a part of necessary operations (for example, as a server array, a group of blade servers, or a multi-processor system). Fig. 8 takes one processor 801 as an example.

The memory 802 is a non-transitory computer readable storage medium provided in the present disclosure. The memory is stored with instructions executable by the at least one processor, so that the at least one processor executes a method for a face liveness detection as described in the disclosure. The non-transitory computer readable storage medium of the disclosure is stored with computer instructions, the computer instructions are caused to execute a method for a face liveness detection.

As a non-transitory computer readable storage medium, the memory 802 may be configured to store a non-transitory software program, a non-transitory computer executable program and a module, such as program instructions/modules corresponding to a method for a face liveness detection in the embodiment of the disclosure. The processor 801 executes various function applications and data processing of the server by running a non-transitory software program, an instruction, and a module stored in the memory 802, that is, a method for a face liveness detection in the above method embodiment is achieved.

The memory 802 may include a program storage area and a data storage area; the program storage area may store operating systems and applications required by at least one function; the data storage area may store data created based on the electronic device for a face liveness detection, etc. In addition, the memory 802 may include a high-speed random access memory, and may further include a non-transitory memory, such as at least one magnetic disk storage device, a flash memory device, or other non-transitory solid-state storage devices. In some embodiments, the memory 802 optionally includes a memory remotely set relative to the processor 801 that may be connected to an electronic device for a face liveness detection by a network. The example of the above networks includes but not limited to an Internet, an enterprise intranet, a local area network, a mobile communication network and their combination.

An electronic device of a method for a face liveness detection may further include: an input apparatus 803 and an output apparatus 804. The processor 801, the memory 802, the input apparatus 803, and the output apparatus 804 may be connected through a bus or in other ways. Fig. 8 takes connection through a bus as an example.

The input apparatus 803 may receive input digital or character information, and generate key signal input related to user setting and function control of an electronic device for a face liveness detection, such as a touch screen, a keypad, a mouse, a track pad, a touch pad, an indicating rod, one or more mouse buttons, a trackball, a joystick and other input apparatuses. The output apparatus 804 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, the one or more computer programs may be executed and/or interpreted on a programmable system including at least one programmable processor, the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, softwares, software applications, or codes) include machine instructions of a programmable processor, and may be implemented with high-level procedure and/or object-oriented programming languages, and/or assembly/machine languages. As used herein, the terms "a machine readable medium" and "a computer readable medium" refer to any computer program product, device, and/or apparatus configured to provide machine instructions and/or data for a programmable processor (for example, a magnetic disk, an optical disk, a memory, a programmable logic device (PLD)), including a machine readable medium that receive machine instructions as machine readable signals. The term "a machine readable signal" refers to any signal configured to provide machine instructions and/or data for a programmable processor.

In order to provide interaction with a user, the systems and technologies described here may be implemented on a computer, and the computer has: a display apparatus for displaying information to a user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

It should be understood that, various forms of procedures shown above may be configured to reorder, add or delete blocks. For example, blocks described in the disclosure may be executed in parallel, sequentially, or in a different order, as long as the desired result of the technical solution disclosed in the present disclosure may be achieved, which will not be limited herein.

## Claims

1. A method for a face liveness detection, comprising:
acquiring (101) a color sequence verification code;
controlling (102) a screen of an electronic device to sequentially generate colors based on a sequence of the colors comprised in the color sequence verification code, controlling a camera of the electronic device to collect an image of a face of a target object in each of the colors to acquire an image sequence containing images of the target object in different colors;
performing (103) a face liveness verification on the target object based on the image sequence to acquire a liveness score value;
correcting face region image of each image in the image sequence, acquiring (104) difference images corresponding respectively to the colors of the images of the image sequence by determining face key points in each image of the image sequence; determining a third coordinate of left eye outer corner and a fourth coordinate of a right eye outer corner in each image based on the face key points in each image; performing affine transformation processing on each image based on the third coordinate and the fourth coordinate to acquire a corrected face region image of each image; and performing a pairwise difference operation on the corrected face region images based on a sequence of colors generated by the screen, and performing a color verification based on the color sequence verification code and the difference images; and
determining (105) a face liveness detection result of the target object based on the liveness score value and a result of the color verification,
**characterised in that** said performing (103) a face liveness verification on the target object based on the image sequence to acquire a liveness score value, comprising:
performing (201) a face alignment on the images of the image sequence to acquire a face image from each image of the image sequence;
performing (202) a facial color liveness detection on each face image to acquire a facial color liveness score of each face image;
intercepting (203) binocular regions respectively from the images of the image sequence to acquire a binocular image from each image of the image sequence;
performing (204) a pupil color liveness detection on the binocular image obtained from each image to acquire a pupil color liveness score of each image; and
acquiring (205) the liveness score value based on the facial color liveness score of each face image and the pupil color liveness score of each image of the image sequence.

2. The method of claim 1, said intercepting (203) binocular regions respectively from the images of the image sequence to acquire a binocular image from each image of the image sequence comprising:
determining face key points in each image of the image sequence;
intercepting a binocular region image from each image of the image sequence;
determining a first coordinate of a left eye corner and a second coordinate of a right eye corner in each binocular region image based on the face key points in each image;
processing the binocular region image based on the first coordinate to obtain a first binocular image;
processing the binocular region image based on the second coordinate to obtain a second binocular image; and
performing superimposition processing on the first binocular image and the second binocular image of each image to obtain the binocular image.

3. The method of claim 1, said acquiring (205) the liveness score value based on the facial color liveness core of each face image and the pupil color liveness score of each image of the image sequence comprising:
performing weighted processing on the facial color liveness score of each face image and the pupil color liveness score of each image of the image sequence to acquire the liveness score value.

4. The method of any of claims 1-3 said performing (104) color verification based on the color sequence verification code and the difference images comprising:
performing a color classification on the difference images to acquire a color sequence, and verifying whether the color sequence is consistent with the color sequence verification code.

5. The method of any of claims 1 to 4, said acquiring (101) a color sequence verification code comprising:
acquiring the color sequence verification code generated by a server.

6. The method of any of claims 1 to 5, further comprising:
continuously tracking the face of the target object during the face liveness detection;
detecting whether a head of the target object moves out of a lens;
in response to the head of the target object moving out of the lens, returning to execute the step of acquiring the color sequence verification code.

7. An apparatus for a face liveness detection, comprising:
an acquiring module (601, 701), configured to acquire a color sequence verification code;
a control module (602, 702), configured to control a screen of an electronic device to sequentially generate colors based on a sequence of the colors comprised in the color sequence verification code, and control a camera of the electronic device to collect an image of a face of a target object in each of the colors to acquire an image sequence containing images of the target object in different colors;
a face liveness verifying module (603, 703), configured to perform a face liveness verification on the target object based on the image sequence to acquire a liveness score value;
a color verifying module (604, 704), configured to correct face region image of each image in the image sequence, acquire difference images corresponding respectively to the colors of the images of the image sequence by determining face key points in each image of the image sequence; determining a third coordinate of left eye outer corner and a fourth coordinate of a right eye outer corner in each image based on the face key points in each image; performing affine transformation processing on each image based on the third coordinate and the fourth coordinate to acquire the corrected face region image of each image; and
performing a pairwise difference operation on the corrected face region images based on a sequence of colors generated by the screen, and perform a color verification based on the color sequence verification code and the difference images; and
a determining module (605, 705), configured to determine a face liveness detection result of the target object based on the liveness score value and a result of the color verification,
**characterised in that** the face liveness verifying module (603, 703) is configured to:
perform a facial color liveness detection on each face image to acquire a facial color liveness score of each face image;
intercept binocular regions respectively from the images of the image sequence to acquire a binocular image from each image of the image sequence;
perform a pupil color liveness detection on each binocular image obtained from each image to acquire a pupil color liveness score of each image; and
acquire the liveness score value based on the facial color liveness score of each face image and the pupil color liveness score of each image of the image sequence.

8. The apparatus of claim 7, wherein, the face liveness verifying module (603, 703) is configured to:
determine face key points in each image of the image sequence;
intercept a binocular region image from each image of the image sequence;
determine a first coordinate of a left eye corner and a second coordinate of a right eye corner in each binocular region image based on the face key points in each image;
process the binocular region image based on the first coordinate to obtain a first binocular image;
process the binocular region image based on the second coordinate to obtain a second binocular image; and
perform superimposition processing on the first binocular image and the second binocular image of each image to obtain the binocular image.

9. The apparatus of any of claims 7 to 8, further comprising:
a detecting module (706), configured to continuously track the face of the target object during the face liveness detection, and detect whether a head of the target object moves out of a lens;
wherein, the acquiring module (601, 701) is further configured to, in response to the head of the target object moving out of the lens, return to execute the step of acquiring the color sequence verification code.

10. A non-transitory computer readable storage medium stored with computer instructions, wherein, the computer instructions are configured to cause a computer to execute the method of any of claims 1 to 6.

11. A computer program product comprising a computer program, wherein, the computer program implements the method of any of claims 1 to 6 when executed by a processor.

## Patentansprüche

1. Verfahren zur Detektion von Gesichtsaktivität, umfassend:
Erwerben (101) eines Farbsequenz-Verifikationscodes;
Steuern (102) eines Bildschirms einer elektronischen Einheit, auf Grundlage einer Sequenz der Farben, die in dem Farbsequenz-Verifikationscode enthalten sind, nacheinander Farben zu erzeugen, Steuern einer Kamera der elektronischen Einheit, in jeder der Farben ein Bild eines Gesichts eines Zielobjekts aufzunehmen, um eine Bildsequenz zu erwerben, welche Bilder des Zielobjekts in verschiedenen Farben enthält;
Durchführen (103) einer Gesichtsaktivitätsverifikation an dem Zielobjekt auf Grundlage der Bildsequenz, um einen Aktivitätspunktwert zu erhalten;
Korrigieren eines Gesichtsregionsbildes jedes Bildes in der Bildsequenz, Erwerben (104) von Differenzbildern, welche jeweils den Farben der Bilder der Bildsequenz entsprechen, durch Bestimmen von Gesichts-Schlüsselpunkten in jedem Bild der Bildsequenz; Bestimmen einer dritten Koordinate einer äußeren Ecke des linken Auges und einer vierten Koordinate einer äußeren Ecke des rechten Auges in jedem Bild auf Grundlage der Gesichts-Schlüsselpunkte in jedem Bild; Durchführen einer affinen Transformationsverarbeitung an jedem Bild auf Grundlage der dritten Koordinate und der vierten Koordinate, um ein korrigiertes Gesichtsregionsbild jedes Bildes zu erhalten; und Durchführen einer paarweisen Differenzoperation an den korrigierten Gesichtsregionsbildern auf Grundlage einer Sequenz von Farben, die von dem Bildschirm erzeugt werden, und Durchführen einer Farbverifikation auf Grundlage des Farbsequenz-Verifikationscodes und der Differenzbilder; und
Bestimmen (105) eines Gesichtsaktivitäts-Detektionsergebnisses des Zielobjekts auf Grundlage des Aktivitätspunktwerts und eines Ergebnisses der Farbverifikation,
**dadurch gekennzeichnet, dass** das Durchführen (103) einer Gesichtsaktivitätsverifikation an dem Zielobjekt auf Grundlage der Bildsequenz zum Erhalten eines Aktivitätspunktwerts umfasst:
Durchführen (201) einer Gesichtsausrichtung an den Bildern der Bildsequenz, um aus jedem Bild der Bildsequenz ein Gesichtsbild zu erhalten;
Durchführen (202) einer Gesichtsfarbaktivitäts-Detektion an jedem Gesichtsbild, um einen Gesichtsfarbaktivitäts-Punktwert jedes Gesichtsbildes zu erhalten;
Abschneiden (203) von Binokularregionen jeweils aus den Bildern der Bildsequenz, um aus jedem Bild der Bildsequenz ein Binokularbild zu erwerben;
Durchführen (204) einer Pupillenfarbaktivitäts-Detektion an dem Binokularbild, das aus jedem Bild erhalten wird, um einen Pupillenfarbaktivitäts-Punktwert jedes Bildes zu erwerben; und
Erwerben (205) des Aktivitätspunktwerts auf Grundlage des Gesichtsfarbaktivitäts-Punktwerts jedes Gesichtsbildes und des Pupillenfarbaktivitäts-Punktwerts jedes Bildes der Bildsequenz.

2. Verfahren nach Anspruch 1, wobei das Abschneiden (203) der Binokularregionen jeweils aus den Bildern der Bildsequenz, um aus jedem Bild der Bildsequenz ein Binokularbild zu erwerben, umfasst:
Bestimmen von Gesichts-Schlüsselpunkten in jedem Bild der Bildsequenz;
Abschneiden eines Binokularregionsbildes aus jedem Bild der Bildsequenz;
Bestimmen einer ersten Koordinate einer Ecke des linken Auges und einer zweiten Koordinate einer Ecke des rechten Auges in jedem Binokularregionsbild auf Grundlage der Gesichts-Schlüsselpunkte in jedem Bild;
Verarbeiten des Binokularregionsbildes auf Grundlage der ersten Koordinate, um ein erstes Binokularbild zu erhalten;
Verarbeiten des Binokularregionsbildes auf Grundlage der zweiten Koordinate, um ein zweites Binokularbild zu erhalten; und
Durchführen einer Überlagerungsverarbeitung an dem ersten Binokularbild und dem zweiten Binokularbild jedes Bildes, um das Binokularbild zu erhalten.

3. Verfahren nach Anspruch 1, wobei das Erwerben (205) des Aktivitätspunktwerts auf Grundlage des Gesichtsfarbaktivitäts-Punktwerts jedes Gesichtsbildes und des Pupillenfarbaktivitäts-Punktwerts jedes Bildes der Bildsequenz umfasst:
Durchführen einer gewichteten Verarbeitung an dem Gesichtsfarbaktivitäts-Punktwert jedes Gesichtsbildes und dem Pupillenfarbaktivitäts-Punktwert jedes Bildes der Bildsequenz, um den Aktivitätspunktwert zu erhalten.

4. Verfahren nach einem der Ansprüche 1 bis 3, wobei das Durchführen (104) der Farbverifikation auf Grundlage des Farbsequenz-Verifikationscodes und der Differenzbilder umfasst:
Durchführen einer Farbklassifikation an den Differenzbildern, um eine Farbsequenz zu erwerben, und Verifizieren, ob die Farbsequenz mit dem Farbsequenz-Verifikationscode übereinstimmt.

5. Verfahren nach einem der Ansprüche 1 bis 4, wobei das Erwerben (101) eines Farbsequenz-Verifikationscodes umfasst:
Erwerben des Farbsequenz-Verifikationscodes, der von einem Server erzeugt wird.

6. Verfahren nach einem der Ansprüche 1 bis 5, ferner umfassend:
kontinuierliches Verfolgen des Gesichts des Zielobjekts während der Gesichtsaktivitätsdetektion;
Detektieren, ob sich ein Kopf des Zielobjekts aus einer Linse herausbewegt;
In Reaktion darauf, dass sich der Kopf des Zielobjekts aus einer Linse herausbewegt, Zurückkehren zur Ausführung des Schritts des Erwerbens des Farbsequenz-Verifikationscodes.

7. Vorrichtung für eine Gesichtsaktivitätsdetektion, umfassend:
ein Erwerbsmodul (601, 701), konfiguriert zum Erwerben eines Farbsequenz-Verifikationscodes;
ein Steuermodul (602, 702), konfiguriert zum Steuern eines Bildschirms einer elektronischen Einheit, auf Grundlage einer Sequenz der Farben, die in dem Farbsequenz-Verifikationscode enthalten sind, nacheinander Farben zu erzeugen, und zum Steuern einer Kamera der elektronischen Einheit, in jeder der Farben ein Bild eines Gesichts eines Zielobjekts aufzunehmen, um eine Bildsequenz zu erwerben, welche Bilder des Zielobjekts in verschiedenen Farben enthält;
ein Gesichtsaktivitäts-Verifikationsmodul (603, 703), konfiguriert zum Durchführen einer Gesichtsaktivitätsverifikation an dem Zielobjekt auf Grundlage der Bildsequenz, um einen Aktivitätspunktwert zu erhalten;
ein Farbverifikationsmodul (604, 704), konfiguriert zum Korrigieren eines Gesichtsregionsbildes jedes Bildes in der Bildsequenz, zum Erwerben von Differenzbildern, welche jeweils den Farben der Bilder der Bildsequenz entsprechen, durch Bestimmen von Gesichts-Schlüsselpunkten in jedem Bild der Bildsequenz; Bestimmen einer dritten Koordinate einer äußeren Ecke des linken Auges und einer vierten Koordinate einer äußeren Ecke des rechten Auges in jedem Bild auf Grundlage der Gesichts-Schlüsselpunkte in jedem Bild; Durchführen einer affinen Transformationsverarbeitung an jedem Bild auf Grundlage der dritten Koordinate und der vierten Koordinate, um das korrigierte Gesichtsregionsbild jedes Bildes zu erhalten; und Durchführen einer paarweisen Differenzoperation an den korrigierten Gesichtsregionsbildern auf Grundlage einer Sequenz von Farben, die von dem Bildschirm erzeugt werden, und Durchführen einer Farbverifikation auf Grundlage des Farbsequenz-Verifikationscodes und der Differenzbilder; und
ein Bestimmungsmodul (605, 705), konfiguriert zum Bestimmen eines Gesichtsaktivitäts-Detektionsergebnisses des Zielobjekts auf Grundlage des Aktivitätspunktwerts und eines Ergebnisses der Farbverifikation,
**dadurch gekennzeichnet, dass** das Gesichtsaktivitäts-Verifikationsmodul (603, 703) konfiguriert ist zum:
Durchführen einer Gesichtsfarbaktivitäts-Detektion an jedem Gesichtsbild, um einen Gesichtsfarbaktivitäts-Punktwert jedes Gesichtsbildes zu erhalten;
Abschneiden von Binokularregionen jeweils aus den Bildern der Bildsequenz, um aus jedem Bild der Bildsequenz ein Binokularbild zu erwerben;
Durchführen einer Pupillenfarbaktivitäts-Detektion an dem Binokularbild, das aus jedem Bild erhalten wird, um einen Pupillenfarbaktivitäts-Punktwert jedes Bildes zu erwerben; und
Erwerben des Aktivitätspunktwerts auf Grundlage des Gesichtsfarbaktivitäts-Punktwerts jedes Gesichtsbildes und des Pupillenfarbaktivitäts-Punktwerts jedes Bildes der Bildsequenz.

8. Vorrichtung nach Anspruch 7, wobei das Gesichtsaktivitäts-Verifikationsmodul (603, 703) konfiguriert ist zum:
Bestimmen von Gesichts-Schlüsselpunkten in jedem Bild der Bildsequenz;
Abschneiden eines Binokularregionsbildes aus jedem Bild der Bildsequenz;
Bestimmen einer ersten Koordinate einer Ecke des linken Auges und einer zweiten Koordinate einer Ecke des rechten Auges in jedem Binokularregionsbild auf Grundlage der Gesichts-Schlüsselpunkte in jedem Bild;
Verarbeiten des Binokularregionsbildes auf Grundlage der ersten Koordinate, um ein erstes Binokularbild zu erhalten;
Verarbeiten des Binokularregionsbildes auf Grundlage der zweiten Koordinate, um ein zweites Binokularbild zu erhalten; und
Durchführen einer Überlagerungsverarbeitung an dem ersten Binokularbild und dem zweiten Binokularbild jedes Bildes, um das Binokularbild zu erhalten.

9. Vorrichtung nach einem der Ansprüche 7 bis 8, ferner umfassend:
ein Detektionsmodul (706), konfiguriert zum kontinuierlichen Verfolgen des Gesichts des Zielobjekts während der Gesichtsaktivitätsdetektion und Detektieren, ob sich ein Kopf des Zielobjekts aus einer Linse herausbewegt;
wobei das Erwerbsmodul (601, 701) ferner konfiguriert ist zum Zurückkehren zur Ausführung des Schritts des Erwerbens des Farbsequenz-Verifikationscodes in Reaktion darauf, dass sich der Kopf des Zielobjekts aus der Linse herausbewegt.

10. Nicht-flüchtiges computerlesbares Speichermedium, auf welchem Computeranweisungen gespeichert sind, wobei die Computeranweisungen so konfiguriert sind, dass sie bewirken, dass ein Computer das Verfahren nach einem der Ansprüche 1 bis 6 ausführt.

11. Computerprogrammprodukt, welches ein Computerprogramm umfasst, wobei durch das Computerprogramm, wenn es von einem Prozessor ausgeführt wird, das Verfahren nach einem der Ansprüche 1 bis 6 realisiert wird.

## Revendications

1. Procédé pour une détection de vivacité de visage, comprenant :
l'acquisition (101) d'un code de vérification de séquence de couleurs ;
la commande (102) d'un écran d'un dispositif électronique pour générer de manière séquentielle des couleurs sur la base d'une séquence des couleurs comprises dans le code de vérification de séquence de couleurs, la commande d'une caméra du dispositif électronique pour collecter une image d'un visage d'un objet cible dans chacune des couleurs pour acquérir une séquence d'images contenant des images de l'objet cible dans différentes couleurs ;
la réalisation (103) d'une vérification de vivacité de visage sur l'objet cible sur la base de la séquence d'images pour acquérir une valeur de score de vivacité ;
la correction d'une image de zone de visage de chaque image dans la séquence d'images,
l'acquisition (104) d'images de différence correspondant respectivement aux couleurs des images de la séquence d'images par détermination de points clés de visage dans chaque image de la séquence d'images ; détermination d'une troisième coordonnée d'un coin externe d'oeil gauche et d'une quatrième coordonnée d'un coin externe d'oeil droit dans chaque image sur la base des points clés de visage dans chaque image ; réalisation d'un traitement de transformation affine sur chaque image sur la base de la troisième coordonnée et de la quatrième coordonnée pour acquérir une image de zone de visage corrigée de chaque image ; et
la réalisation d'une opération de différence par paires sur les images de zone de visage corrigée sur la base d'une séquence de couleurs générée par l'écran, et la réalisation d'une vérification de couleurs sur la base du code de vérification de séquence de couleurs et des images de différence ; et
la détermination (105) d'un résultat de détection de vivacité de visage de l'objet cible sur la base de la valeur de score de vivacité et d'un résultat de la vérification de couleurs,
**caractérisé en ce que** ladite réalisation (103) d'une vérification de vivacité de visage sur l'objet cible sur la base de la séquence d'images pour acquérir une valeur de score de vivacité, comprenant :
la réalisation (201) d'un alignement de visage sur les images de la séquence d'images pour acquérir une image de visage à partir de chaque image de la séquence d'images ;
la réalisation (202) d'une détection de vivacité de couleur faciale sur chaque image de visage pour acquérir un score de vivacité de couleur faciale de chaque image de visage ;
l'interception (203) de zones binoculaires respectivement à partir des images de la séquence d'images pour acquérir une image binoculaire à partir de chaque image de la séquence d'images ;
la réalisation (204) d'une détection de vivacité de couleur de pupilles sur l'image binoculaire obtenue à partir de chaque image pour acquérir un score de vivacité de couleur de pupilles de chaque image ; et
l'acquisition (205) de la valeur de score de vivacité sur la base du score de vivacité de couleur faciale de chaque image de visage et du score de vivacité de couleur de pupilles de chaque image de la séquence d'images.

2. Procédé selon la revendication 1, ladite interception (203) de zones binoculaires respectivement à partir des images de la séquence d'images pour acquérir une image binoculaire à partir de chaque image de la séquence d'images comprenant :
la détermination de points clés de visage dans chaque image de la séquence d'images ;
l'interception d'une image de zone binoculaire à partir de chaque image de la séquence d'images ;
la détermination d'une première coordonnée d'un coin d'oeil gauche et d'une deuxième coordonnée d'un coin d'oeil droit dans chaque image de zone binoculaire sur la base des points clés de visage dans chaque image ;
le traitement de l'image de zone binoculaire sur la base de la première coordonnée pour obtenir une première image binoculaire ;
le traitement de l'image de zone binoculaire sur la base de la deuxième coordonnée pour obtenir une seconde image binoculaire ; et
la réalisation d'un traitement de superposition sur la première image binoculaire et la seconde image binoculaire de chaque image pour obtenir l'image binoculaire.

3. Procédé selon la revendication 1, ladite acquisition (205) de la valeur de score de vivacité sur la base du score de vivacité de couleur faciale de chaque image de visage et du score de vivacité de couleur de pupilles de chaque image de la séquence d'images comprenant :
la réalisation d'un traitement pondéré sur le score de vivacité de couleur faciale de chaque image de visage et le score de vivacité de couleur de pupilles de chaque image de la séquence d'images pour acquérir la valeur de score de vivacité.

4. Procédé selon l'une des revendications 1-3, ladite réalisation (104) d'une vérification de couleurs sur la base du code de vérification de séquence de couleurs et des images de différence comprenant :
la réalisation d'une classification de couleur sur les images de différence pour acquérir une séquence de couleurs, et la vérification pour établir si la séquence de couleurs est conforme au code de vérification de séquence de couleurs.

5. Procédé selon l'une des revendications 1 à 4, ladite acquisition (101) d'un code de vérification de séquence de couleurs comprenant :
l'acquisition du code de vérification de séquence de couleurs généré par un serveur.

6. Procédé selon l'une des revendications 1 à 5, comprenant en outre :
le suivi continu du visage de l'objet cible pendant la détection de vivacité de visage ;
la détection pour établir si une tête de l'objet cible sort d'un objectif ;
en réponse à la tête de l'objet cible sortant de l'objectif, le retour à l'exécution de l'étape d'acquisition du code de vérification de séquence de couleurs.

7. Appareil pour une détection de vivacité de visage, comprenant :
un module d'acquisition (601, 701), configuré pour acquérir un code de vérification de séquence de couleurs ;
un module de commande (602, 702), configuré pour commander un écran d'un dispositif électronique pour générer de manière séquentielle des couleurs sur la base d'une séquence des couleurs comprises dans le code de vérification de séquence de couleurs, et commander une caméra du dispositif électronique pour collecter une image d'un visage d'un objet cible dans chacune des couleurs pour acquérir une séquence d'images contenant des images de l'objet cible dans différentes couleurs ;
un module de vérification de vivacité de visage (603, 703), configuré pour réaliser une vérification de vivacité de visage sur l'objet cible sur la base de la séquence d'images pour acquérir une valeur de score de vivacité ;
un module de vérification de couleurs (604, 704), configuré pour corriger une image de zone de visage de chaque image dans la séquence d'images, acquérir des images de différence correspondant respectivement aux couleurs des images de la séquence d'images par détermination de points clés de visage dans chaque image de la séquence d'images ; détermination d'une troisième coordonnée d'un coin externe d'oeil gauche et d'une quatrième coordonnée d'un coin externe d'oeil droit dans chaque image sur la base des points clés de visage dans chaque image ; réalisation d'un traitement de transformation affine sur chaque image sur la base de la troisième coordonnée et de la quatrième coordonnée pour acquérir l'image de zone de visage corrigée de chaque image ; et réalisation d'une opération de différence par paires sur les images de zone de visage corrigée sur la base d'une séquence de couleurs générées par l'écran, et réaliser une vérification de couleur sur la base du code de vérification de séquence de couleurs et des images de différence ; et
un module de détermination (605, 705), configuré pour déterminer un résultat de détection de vivacité de visage de l'objet cible sur la base de la valeur de score de vivacité et d'un résultat de la vérification de couleur,
**caractérisé en ce que** le module de vérification de vivacité de visage (603, 703) est configuré pour :
réaliser une détection de vivacité de couleur faciale sur chaque image de visage pour acquérir un score de vivacité de couleur faciale de chaque image de visage ;
intercepter des zones binoculaires respectivement à partir des images de la séquence d'images pour acquérir une image binoculaire à partir de chaque image de la séquence d'images ;
réaliser une détection de vivacité de couleur de pupilles sur chaque image binoculaire obtenue à partir de chaque image pour acquérir un score de vivacité de couleur de pupilles de chaque image ; et
acquérir la valeur de score de vivacité sur la base du score de vivacité de couleur faciale de chaque image de visage et du score de vivacité de couleur de pupilles de chaque image de la séquence d'images.

8. Appareil selon la revendication 7, dans lequel, le module de vérification de vivacité de visage (603, 703) est configuré pour :
déterminer des points clés de visage dans chaque image de la séquence d'images ;
intercepter une image de zone binoculaire à partir de chaque image de la séquence d'images ;
déterminer une première coordonnée d'un coin d'oeil gauche et une deuxième coordonnée d'un coin d'oeil droit dans chaque image de zone binoculaire sur la base des points clés de visage dans chaque image ;
traiter l'image de zone binoculaire sur la base de la première coordonnée pour obtenir une première image binoculaire ;
traiter l'image de zone binoculaire sur la base de la deuxième coordonnée pour obtenir une seconde image binoculaire ; et
réaliser un traitement de superposition sur la première image binoculaire et la seconde image binoculaire de chaque image pour obtenir l'image binoculaire.

9. Appareil selon l'une des revendications 7 à 8, comprenant en outre :
un module de détection (706), configuré pour suivre en continu le visage de l'objet cible pendant la détection de vivacité de visage, et détecter si une tête de l'objet cible sort d'un objectif ;
dans lequel, le module d'acquisition (601, 701) est en outre configuré pour, en réponse à la tête de l'objet cible sortant de l'objectif, retourner à l'exécution de l'étape d'acquisition du code de vérification de séquence de couleurs.

10. Support de stockage non transitoire lisible par ordinateur dans lequel sont stockées des instructions informatiques, dans lequel, les instructions informatiques sont configurées pour amener un ordinateur à exécuter le procédé selon l'une des revendications 1 à 6.

11. Produit de programme informatique comprenant un programme informatique, dans lequel, le programme informatique met en œuvre le procédé selon l'une des revendications 1 à 6, lorsqu'il est exécuté par un processeur.
